# EUROPÄISCHE PATENTANMELDUNG

(11) **EP 1 688 626 A1**
(43) Veröffentlichungstag der Anmeldung: **09.08.2006**
(21) Anmeldenummer: 06100153.3
(22) Anmeldetag: 09.01.2006
(51) Int. Cl.: F16B 5/00, B61D 17/04, B62D 27/02, B62D 29/00

(54) **Verbindung von Profilen, insbesondere Aluminium-Strangpressprofilen im Fahrzeugbau**

(30) Priorität: 03.02.2005 DE 102005005034
(71) Anmelder: SIEMENS AKTIENGESELLSCHAFT, 80333 München (DE)
(72) Erfinder: Stiedl, Hans, 47495 Rheinberg (DE)

(57) **Zusammenfassung**

Die Erfindung bezieht sich auf eine Verbindung von Profilen (1 und 2), insbesondere von Aluminium-Strangpressprofilen im Fahrzeugbau. Die Profile (1 und 2) weisen im Bereich der Verbindungsstelle jeweils eine halbkreisförmige Kammer (1a und 2a) auf, wobei diese Kammern (1 und 2) in zusammengefügter Position der Profile (1 und 2) gemeinsam ein Kernrohr (3) aufnehmen. Dieses Kernrohr (3) wirkt nach plastischem Aufweiten kraftübertragend mit den Wandungen der beiden Kammern (1a und 2a) zusammen.

## Beschreibung

Die Erfindung betrifft eine Verbindung von Profilen, insbesondere von Aluminium-Strangpressprofilen im Fahrzeugbau.

Durch die Druckschrift DE 29 08 823 A1 ist ein aus Aluminium-Strangpressprofilen bestehendes Untergestell eines Schienenfahrzeuges bekannt, bei dem plattenförmige, den Bodenträger bildende Profile einerseits mit gleichartigen Profilen, andererseits mit als Außenlangträger dienenden kastenförmigen Profilen verbunden sind. Die vorgenannten Profile weisen an ihren Kanten in obiger Druckschrift als Gabelzinken (10d, 20a) bezeichnete Vorsprünge auf, die bei und nach dem Zusammenfügen der Profile im Sinne von Auflagern und einer Zentrierung zusammenwirken. Das kraftübertragende Verbinden der Profile erfolgt durch Schweißen an ihren Vorsprüngen. Bei derartigen Schweißkonstruktionen treten durch Schweißwärme und Schrumpf relativ hohe Verformungen (Schweißverzug) auf, deren Ausgleich durch nachträgliches Richten einen beträchtlichen Aufwand verursacht. Besonders bei Schweißkonstruktionen aus Aluminium müssen auch Festigkeitsverluste im Bereich der Schweißnähte berücksichtigt werden, entweder durch Reduzieren der zulässigen Spannungen oder durch Vergrößern der Wanddicken mit der Folge eines Gewichtsanstieges.

Der Erfindung liegt die Aufgabe zugrunde, bei einer Verbindung von Profilen der gattungsgemäßen Art die vorgenannten Nachteile zu vermeiden. Die Verbindung soll vielmehr auf möglichst einfache und von den Kosten her günstige Weise so ausgebildet sein, dass durch Kaltfügen eine hohe Festigkeit und eine bleibende Maßgenauigkeit der mit den Profilen erstellten Bauteile oder Baugruppen erreichbar sind.

Diese Aufgabe wird erfindungsgemäß dadurch gelöst, dass die Profile im Bereich der Verbindungsstelle jeweils eine halbkreisförmige Kammer aufweisen, wobei diese Kammern in zusammengefügter Position der Profile gemeinsam ein Kernrohr aufnehmen, das nach plastischem Aufweiten kraftübertragend mit den Wandungen der beiden Kammern zusammenwirkt.

Der Gegenstand nach der Erfindung zeichnet sich insbesondere dadurch aus, dass die Profile mit hoher Fügegeschwindigkeit und ohne Einbringen von Wärme fest verbunden werden, wobei die Maßgenauigkeit der erstellten Bauteile oder Baugruppen erhalten bleibt. Da keine Wärme eingebracht wird, können auch lackierte Profile und/oder bereits mit Ausbauteilen bestückte Profile problemlos verbunden werden.

Vorteilhafte Ausgestaltungen der Erfindung sind in den Unteransprüchen angegeben.

Ausführungsbeispiele der Erfindung sind in der Zeichnung prinzipartig dargestellt und werden im Weiteren näher beschrieben.

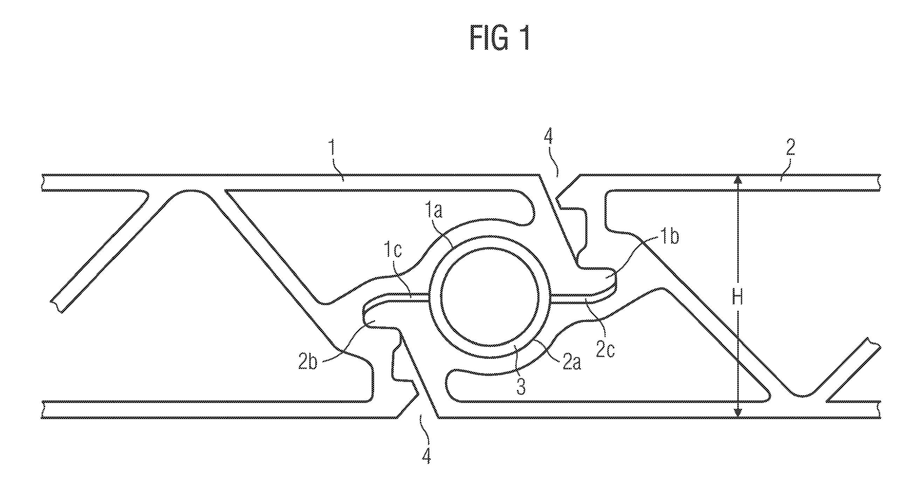

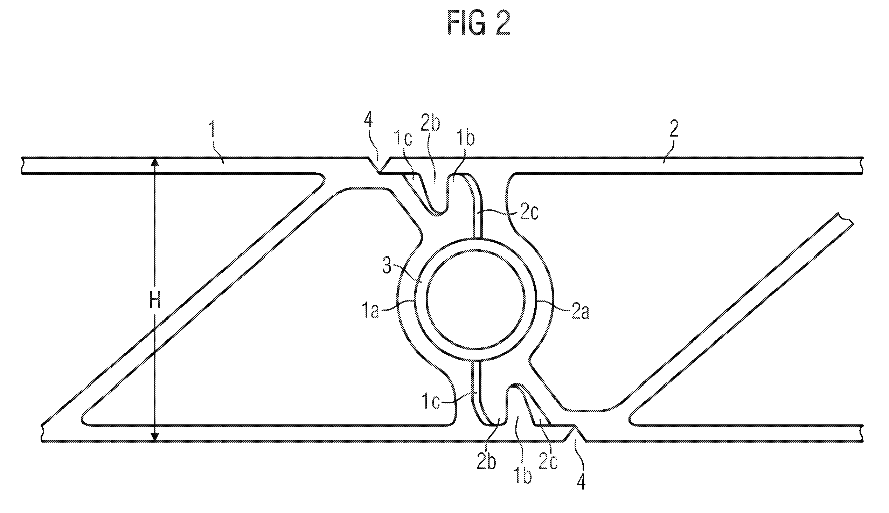

Die Fig. 1 und 2 zeigen jeweils unterschiedlich ausgebildete Aluminium-Strangpressprofile im Bereich einer Verbindungsstelle, in Seitenansicht. Diese Profile eignen sich beispielsweise zum Bilden des Bodenträgers eines Fahrzeuguntergestelles, bei dem die Höhe H etwa 60 bis 75 mm beträgt, oder einer Fahrzeugseitenwand mit der Höhe H von etwa 40 mm.

Die beiden Profile 1 und 2 werden vor ihrem kraftübertragenden Verbinden zunächst zusammengefügt, wobei am jeweiligen Profil angeformte Vorsprünge 1b und 2b hakenförmig in entsprechende Taschen 2c bzw. 1c eingreifen. Gemäß Fig. 1 sind die Vorsprünge 1b und 2b sowie die Taschen 1c und 2c so angeordnet, dass das Zusammenfügen der Profile 1 durch Verschieben in Längsachse erfolgen kann. Die aus Fig. 2 ersichtliche Anordnung der in diesem Beispiel doppelt vorhandenen Vorsprünge 1b und 2b sowie Taschen 1c und 2c ermöglicht das Zusammenfügen der Profile 1 und 2 durch Verschieben in der Hochachse, also in Richtung der eingezeichneten Maßlinie H.

Die Profile 1 und 2 weisen im Bereich der Verbindungsstelle jeweils eine halbkreisförmige Kammer 1a und 2a auf. In diese Kammern 1 und 2 wird in zusammengefügter Position der Profile 1 und 2 ein Kernrohr 3 eingeschoben, wobei die Profile dann nicht mehr trennbar sind. Das in den Kammern 1a und 2a einliegende Kernrohr 3 wird plastisch aufgeweitet und wirkt dann kraftübertragend mit den Wandungen der beiden Kammern 1a und 2a zusammen.

Das plastische Aufweiten des Kernrohres 3 kann mechanisch durch Einziehen eines Dornes erfolgen, dessen Spitze vorzugsweise wie ein Kegelstumpf ausgebildet ist. Der Außendurchmesser dieses Kegelstumpfes ist anfänglich etwas kleiner als der Innendurchmesser des Kernrohres 3 und nimmt im Weiteren derart zu, dass die gewollte plastische Aufweitung des Kernrohres 3 eintritt. Die Geschwindigkeit, mit welcher der Dorn in das Kernrohr 3 eingezogen wird, kann eine Größenordnung von 20 m pro Minute betragen.

Alternativ kann das plastische Aufweiten des Kernrohres 3 durch Einfüllen eines Druckmediums (beispielsweise Öl) und alsdann mittels einer Pumpe auf hydraulische Weise erfolgen.

Um Korrosion zu verhindern, werden im Bereich der Verbindungsstelle der beiden Profile 1 und 2 befindliche Fugen 4 durch ein elastisches, hier nicht dargestelltes Dichtungsmittel abgedichtet.

## Patentansprüche

1. Verbindung von Profilen (1 und 2), insbesondere Aluminium-Strangpressprofilen im Fahrzeugbau,
**dadurch gekennzeichnet, dass**
die Profile (1 und 2) im Bereich der Verbindungsstelle jeweils eine halbkreisförmige Kammer (1a und 2a) aufweisen, wobei diese Kammern (1 und 2) in zusammengefügter Position der Profile (1 und 2) gemeinsam ein Kernrohr (3) aufnehmen, das nach plastischem Aufweiten kraftübertragend mit den Wandungen der beiden Kammern (1a und 2a) zusammenwirkt.

2. Verbindung nach Anspruch 1,
**dadurch gekennzeichnet, dass**
das plastische Aufweiten des Kernrohres (3) mechanisch durch Einziehen eines Dornes erfolgt.

3. Verbindung nach Anspruch 1,
**dadurch gekennzeichnet, dass**
das plastische Aufweiten des Kernrohres (3) durch ein eingefülltes Druckmedium (beispielsweise Öl) auf hydraulische Weise erfolgt.

4. Verbindung nach einem der Ansprüche 1 bis 3,
**dadurch gekennzeichnet, dass**
im Bereich der Verbindungsstelle der beiden Profile (1 und 2) befindliche Fugen (4) durch eine elastisches Dichtungsmittel abgedichtet sind, um Korrosion zu verhindern.
